(19) **Europäisches Patentamt**
**European Patent Office**
**Office européen des brevets**

(11) **EP 1 609 368 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(21) Anmeldenummer: **04748941.4**

(22) Anmeldetag: **25.06.2004**

(51) Int Cl.:
*A23B 4/02* (2006.01)　*A23L 1/025* (2006.01)
*A23L 1/31* (2006.01)　*A23L 1/317* (2006.01)
*A23L 3/30* (2006.01)　*A23B 4/26* (2006.01)
*A23B 4/01* (2006.01)

(86) Internationale Anmeldenummer:
**PCT/RU2004/000243**

(87) Internationale Veröffentlichungsnummer:
**WO 2005/070218 (04.08.2005 Gazette 2005/31)**

(54) **VERFAHREN ZUR HERSTELLUNG VON FLEISCHNAHRUNGSMITTELN**

METHOD FOR PRODUCING MEAT FOODS

PROCEDE DE FABRICATION D'ALIMENTS CARNES

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.01.2004 RU 2004101396**

(43) Veröffentlichungstag der Anmeldung:
**28.12.2005 Patentblatt 2005/52**

(73) Patentinhaber:
• **Obschestvo S Ogranichennoi Otvetstvennostyu "Astor-s"**
**Vologda, 160019 (RU)**
• **Shestakov, Sergei Dmitrievich**
**Vologda 160031 (RU)**

(72) Erfinder: **SHESTAKOV, Sergei Dmitrievich**
**Vologda, 160031 (RU)**

(74) Vertreter: **Jeck, Anton et al**
**Patentanwalt,**
**Klingengasse 2/1**
**71665 Vaihingen/Enz (DE)**

(56) Entgegenhaltungen:
WO-A-90/05458　　WO-A-95/18537
CA-A1- 2 301 133　CH-A- 309 167
DE-A1- 19 519 851　DE-A1- 19 532 782
DE-C- 935 763　　FR-A- 2 807 955
RU-C1- 2 209 112　SU-A1- 1 717 063
US-A- 3 743 523

• DATABASE WPI Section Ch, Week 199920 Derwent Publications Ltd., London, GB; Class D12, AN 1999-231914 XP002357615 -& ES 2 127 152 A1 (UNIV VALENCIA POLITECNICA) 1 April 1999 (1999-04-01)
• BORISENKO L.A. ET AL: 'Ispolzovanie aktivirovannykh zhidkikh sistem dlya proizvodstva myasnykh delikatesov.' MYASNAYA INDUSTRIYA. vol. 6, 2001, pages 12 - 13

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf die Fleischindustrie, insbesondere auf ein Verfahren zum Pökeln von Fleisch bei der Herstellung von Fleischwaren, beispielsweise Wursterzeugnissen oder Erzeugnissen aus Vollmuskelrohstoff.

In der technologischen Praxis der Fleischindustrie lässt sich das Pökeln von Fleisch als kurz- und langzeitiges unterscheiden. Die Dauer des Pökelns wird durch die Zerkleinerungsstufe des Fleischrohstoffs bestimmt. Je höher diese Stufe ist, desto schneller erfolgt die Durchdringung des Gewebes mit Pökelsalz und die Extraktion von salz- und wasserlöslichen Eiweißen, deren Gehalt in der Salzlake die technologischen Eigenschaften des gepökelten Fleischrohstoffs und die Konsumqualitäten des fertigen Produkts bestimmen. Somit wird das kurzzeitige Pökeln für den zerkleinerten Rohstoff, beispielsweise bei der Wurstherstellung, verwendet, während das langzeitige Pökeln bei der Herstellung von Vollmuskelerzeugnissen, wie Schinken, Rippenstück, Bruststück usw., verwendet wird.

Die Hauptaufgabe des Pökelns ist die Bildung des Geschmacks, der Farbe, der Wasserbindungsfähigkeit (Saftbindungsfähigkeit) des Fleischrohstoffs; im Falle der Zubereitung von Hackfleisch für Wurstwaren ist auch die Plastizität des Hackfleisches relevant, von der die Konsistenz und die Ausbeute der Fertigwaren abhängen.

Die aufgezählten Eigenschaften werden durch die Veränderung der Menge der in den Rohstoff mittels Pökeln einzuführenden Nahrungskonservierungs-, farbstabilisierenden und saftbindenden Zusatzstoffe (Kochsalz, Nitrite, Phosphate usw.) sowie durch die Veränderung der Dauer der Einlagerung des Fleisches im Pökelprozess beeinflusst. Der Pökelprozess umfasst mehrere Etappen bei der Zubereitung der Salzlake und bei der Vermischung mit dem Fleischrohstoff.

Es sind Verfahren zum Pökeln von Fleisch mit trockenen Pökelmischungen bekannt. Beispielsweise ist die Pökelmischung "Nitritsalz" für die Herstellung von Fleischwaren bekannt, die ein Gemisch darstellt, das Kochsalz, Natriumnitrit und Natriumferrocyanid als Wirkstoffe gegen Zusammenballen enthält (s. Belov V.J., Vagin V.V., "Salz - der universelle Nahrungsmittelzusatzstoff", Fleischindustrie, Nr. 6, 1998). Zu den Nachteilen dieses Verfahrens zählen die Dauer der Lagerung in der Salzlake, der Gehalt an Natriumferrocyanid in der Salzlake und die große Menge von Natriumnitrit, das eine potentielle Gefahr für die Gesundheit des Menschen darstellt.

Es ist auch eine Salzlake bekannt, die Kochsalz, Natriumnitrit, Nahrungsphosphate und Maltosedextrin im Verhältnis 1:0,1:0,03:0,04 (Patent RU 2102890 C1, 27.01.1998) enthält. Zu den Nachteilen dieser Salzlake zählen auch die Dauer der Lagerung von Fleisch in der Salzlake und der Gehalt von großen Mengen von Phospaten und Natriumnitrit in der Pökelmischung. Es ist allgemein bekannt, dass das in Fleischprodukten verwendete Natriumnitrit (als Farbstabilisierungs- und Konservierungszusatzstoff), Phosphat (als Saftbindungszusatzstoff) und die erhöhte Menge an Natriumchlorid (als Konservierungsmittel) zur Erhöhung der ökologischen Gefahr der hergestellten Fleischprodukte führt, ungeachtet des sich in der Nahrungsmittelindustrie entwickelnden Konzepts zur Herstellung von Produkten für eine gesunde Ernährung.

Ferner ist ein Verfahren zum Pökeln von Fleisch bekannt (Patent RU 221914 C2, 27.08.2003), das ein Einpumpen einer Salzlake in das Fleisch, die Kochsalz, Natriumnitrit, Nahrungsphosphate, Zucker, Askorbinsäure und Wasser enthält, und eine nachfolgende, mechanische Bearbeitung in einer "Vakuum-tumbler"-Maschine im Laufe von 10-12 Stunden zyklusweise in einem vorgegebenen Modus vorsieht. Zu den Nachteilen dieses Verfahrens zum Pökeln zählen die hohe Energieintensität, Dauer, Verwendung von Natriumnitrit und Phosphaten für das Pökeln sowie die Tatsache, dass dieses Verfahren nur für das Pökeln von Vollmuskelfleischprodukten einsetzbar ist.

Weiter ist ein Verfahren zur Gewinnung eines Räucherpräparats durch Adsorbieren und Kondensieren einer Rauch-Luft-Mischung mit Wasser bekannt; dieses Verfahren sieht das Extrahieren des Rauchs aus dem rauchbildenden Rohstoff und die Vermischung des Rauchs mit den Wasserkomponenten vor. Dabei wird als Wasserkomponente aktiviertes Wasser eingesetzt, das durch eine Elektrobearbeitung einer wasserhaltigen Ausgangsmischung in einem Membranelektrolysator gewonnen worden war (Patent RU 2130267 C1, 20.05.1999). Aus diesem Verfahren ist die Verwendung von aktiviertem Wassers bekannt, das durch die Elektrobearbeitung einer wasserhaltigen Mischung in dem Membranelektrolysator gewonnen worden war.

Es ist auch ein Verfahren zum Pökeln von Fleisch unter Verwendung von elektrochemisch aktiviertem Wasser für die Zubereitung der Salzlake bekannt (Borisenko A.A., "Die thermogravimetrische Analyse der Verbindungsformen von Feuchtigkeit im salzigen Rindfleisch", Fleischindustrie, 2001, Nr. 7, S. 45, 46). Nachteilig bei diesem Verfahren ist, dass das Wasser durch die Elektrolyse aktiviert wird, wodurch das Vorhandensein von Mineralsalzen im Wasser ausgeschlossen wird, und dass die Elektrolyte zur Vermeidung der Entstehung von Elektrodenreaktionen für den menschlichen Organismus gefährliche Produkte sind. Die Verwendung von vorher gereinigtem Wasser für die Aktivierung verlangt einen erheblichen Energieaufwand, einen zusätzlichen Material- und Chemikalienverbrauch und eine nachfolgende Wiederherstellung des mineralischen Bestands, über welchen das Wasser verfügen soll, das als Teil des Lebensmittelprodukts verwendet wird.

Dies alles macht die beschriebenen Verfahren kostspielig und für die Massenherstellung von Lebensmitteln wenig tauglich.

Die Lösung, die der angemeldeten Lösung technisch am nächsten steht, ist ein Verfahren zum Pökeln, beispielsweise von Schinken, das die Unterbringung der Fleischware in einem Behälter, die Vakuumbehandlung des Behälters, das Durchstechen der Fleischware mit Nadeln und eine nachfolgende Vakuumbehandlung vorsieht.

Bei der Realisierung des Verfahrens wird in den Behälter eine Salzlake eingepumpt und unter Vakuum gesetzt; danach wird die Salzlake Ultraschallschwingungen ausgesetzt und somit das Produkt Vibrationen unterzogen. Nach der Entfernung des Produkts wird zusätzlich eine Vakuumbehandlung der Fleischware durchgeführt (Urheberschein SU 1717063 A1, 07.031992). Nachteilig bei diesem Verfahren ist, dass die Ultraschallbehandlung sowohl die Salzlake als auch den Fleischrohstoff trifft, wodurch neben der Intensivierung der Extraktion von salzwasserlöslichen Eiweißen in der Salzlake die bekannten Effekte der Denaturierung der Eiweiße unter Einwirkung der Schwingungsenergie auftreten (Elpiner I.E. "Ultraschall, Physikalischchemische und biologische Einwirkung", M: IF-ML, 1963, 420 Seiten, Bilder). Dies kann den Verlust der Eiweiße im Laufe der nachfolgenden Wärmebehandlung und die Verschlechterung der Konsumqualitäten des Produkts verursachen.

Das technische Ergebnis der Erfindung ist das Ausschließen der unorganischen, saftbindenden und farbstabilisierenden Zusatzstoffe aus der Salzlake, also aus dem Endprodukt, bzw. die Verminderung des Gehalts an diesen Zusatzstoffen, die Senkung des Gehalts an Geschmacks- und Konservierungszusatzstoffen, insbesondere Kochsalz, und die Verkürzung der Pökeldauer unter Erhaltung des traditionellen Geschmacks und des Aussehens des fertigen Produkts.

Das genannte technische Ergebnis wird dadurch erreicht, dass beim Pökeln von Fleisch für die Zubereitung von Fleischwaren folgendes durchgeführt wird: die das Kochsalz enthaltende Salzlake wird zubereitet, die Salzlake wird einer Fließbearbeitung in einem Gehäuse-Kavitationsreaktor oder einer Portionsbearbeitung in einem gehäuselosen Kavitationsreaktor unterzogen, und die aktivierte Salzlake wird mit Fleischrohstoff vermischt. Dabei erfolgt die Aktivierung der Salzlake bei einem Verhältniswert der innerhalb des Reaktors maximalen Druckamplitude der akustischen Welle zum hydrostatischen Druck im Reaktor in einem Bereich von 2:1 bis 23:1.

Zur Herstellung von Wurstwaren erfolgt die Vermischung der aktivierten Salzlake mit Fleischrohstoff gleichzeitig mit der Zerkleinerung des Fleisches oder durch die Einführung der aktivierten Salzlake in das vorher zerkleinerte Fleisch. Die Vermischung der aktivierten Salzlake mit Fleischrohstoff kann auch durch ein Spritzen der aktivierten Salzlake in das Vollmuskelfleisch oder durch das Eintauchen des Vollmuskelfleisches in die aktivierte Salzlake erfolgen, wobei das Eintauchen auch von einem Durchstechen des Fleisches begleitet sein kann.

Das Verfahren ermöglicht eine erneute Verwendung der Salzlake durch eine Wiederaktivierung der verwerteten Salzlake mit dem beschriebenen Verfahren und die Verwendung in der beschriebenen Weise.

Das Fleischprodukt, das mit dem Verfahren gemäß der Erfindung hergestellt wird, genügt den gegenwärtigen Anforderungen an das Produkt für eine gesunde Ernährung, enthält keine Phosphate und Nitrite oder diese nur in einer kleineren Menge und enthält nur eine kleinere Menge an Kochsalz. Dabei verschlechtern sich der traditionelle Geschmack und das Aussehen des Fleischprodukts nicht.

Als Stand der Technik ist auch eine Ultraschallbearbeitung von Wasser im Kavitationsbetrieb bei einem Verfahren zur Bearbeitung von Getreide vor der Lagerung bekannt (vgl. Patent RU 2171568 C1, 10.082001), doch wird bei diesem Verfahren die Ultraschallbearbeitung des Wassers für die Verbesserung der Mahlfähigkeiten des Getreides verwendet. Die Gesamtausbeute von Mehl und die Ausmahlfähigkeit der Hüllen werden erhöht, und der mikrobiologische Verschmutzungsgrad des aus diesem Korn gewonnen Mehls wird gesenkt.

Außerdem wird beim Verfahren gemäß der Erfindung die Salzlake im Gehäuse- und gehäuselosen Kavitationsreaktor aktiviert, der im Buch von Schestakov S.D., "Grundlagen der Technologie für die Kavitationsdesintegration; die Theorie des Kavitationsreaktors", M: EDA-press , 2001, 173 S., beschrieben ist.

Der Apparat, der auf dem Bild zur Beschreibung des Patents RU 2171568 C1, 10.08.2001 dargestellt ist, ist kein Kavitationsreaktor nach der Definition, die in diesem Buch gegeben wurde, da seine Resonanzzellen voneinander zwecks Vermeidung eines gegenseitigen Interferenzlöschens der darin entstehenden zylindrischen und flachen Gegenphasenwellen nicht isoliert sind, wodurch die Kavitationseffektivität vermindert wird.

Wie bekannt ist, soll zur Anregung der Kavitation in Flüssigkeit die Druckamplitude Ap im Bauch der elastischen, akustischen Welle höher als ein für jede Flüssigkeit einzelner Schwellenwert sein, der von den thermodynamischen, mechanischen und chemischen Eigenschaften dieser Flüssigkeit und vom hydrostatischen Druck $P_h$ darin abhängig ist. Das grundlegende, dynamische Merkmal der Erscheinung der Kavitation ist der Impuls des Drucks, der von der Kavitationsblase in der Phase ihres Kollapses erzeugt wird, der die Zeitspanne darstellt, in der der Radius der Kavitationsblase geringer als der Radius beim Druck $P_h$ ist. Dieses Merkmal wird von der Funktion beschrieben, die durch die Lösung des Systems der Differentialgleichungen vom Pulsieren der Kavitationsblase im äußerlichen, akustischen Feld erhalten wird (s. Knapp R., Daily J., Hammet, Kavitatsion: Mir, 1974, 348 Seiten mit Bildern).

Ihrerseits ist die maximale Zeit zwischen den Phasen des Kollapses der Kavitationsblase, die in Bruchteilen der Periode der elastischen, akustischen Welle T ausgedrückt wird, die Funktion Ap (s. Physik und Technik des Hochleistungsultraschalls, "Die Hochleistungsultraschallfelder" unter Red. von L.D. Rozenberg, M: Nauka-Verlag, 1968, 265 Seiten mit Bildern). Je geringer die Dauer der Kollapsphase in Bezug auf T ist, desto höher ist der Wert des Druckimpulses, also der Effektivität der Kavitationseinwirkung.

Aus den oben angeführten Quellen ist es auch bekannt, dass beim Zerplatzen der Blase zum ersten Mal im Laufe der die Kavitation erzeugenden akustischen Welle vor der Vollendung dieser Periode die Blase dann in der verbliebenen Zeit bis zu ihrem Ende in kleinen zeitlichen Abständen zwischen den mehrmaligen Kollapsen oszilliert.

Es wurde bei der Untersuchung der Kavitationsaktivierung der Lösungen von Salzlake-Stoffen zum Pökeln von Fleischrohstoff Folgendes festgestellt, das Gegenstand dieser Erfindung ist:

1.) Die Dauer der Phase des Kollapses $T_c$, ausgedrückt in relativen Einheiten zur Länge der Periode T der akustischen Welle, hängt schwach vom Radius der ruhenden Kavitationsblasen ab und ist mit einer für die praktische Verwendung ausreichenden Genauigkeit proportional zum Proportionalitätsfaktor, der gleich 0,04 der ersten abgeleiteten Größe gemäß der relativen Druckamplitude

$$a_p = \frac{A_p}{P_h}$$

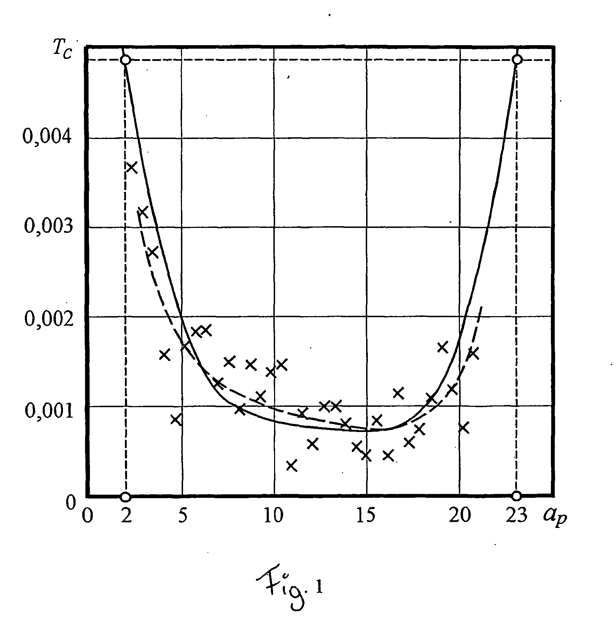

ist, der maximal zwischen den Kollapsen der Zeitspanne ist (s. Fig. 1).

2.) Einer von allen Druckimpulsen, der von der Kavitationsblase für die Zeit T erzeugt wird, überschreitet erheblich die übrigen Impulse nach Größe in der gleichen Periode, beginnend mit der Druckamplitude $A_p$=2·$P_h$. Daraus wurde die Schlussfolgerung gezogen, dass der Modus der wirkungsvollen Kavitation im Rahmen der Amplitudewerte im Bauch des Drucks der akustischen Welle liegt, der sie erzeugt; bei diesen Werten überschreitet der Wert der Dauer des Kollapses den Wert nicht, der dem Druck 2·$P_h$ entspricht. Aus der Fig. 1 ist erkennbar, dass dieser Bereich Ap = {2 < $A_p$<23·$P_h$} beträgt.

3.) Innerhalb des genannten Bereichs hängt die Kavitationseinwirkung praktisch von der Größe der vollen Energie nicht ab, die im Reaktor zerstreut wird, weil sich bei ihrer Variierung durch die Veränderung $A_p$ nur die Wechselbeziehung der potentiellen und kinetischen Energie ändert, was bei einer wesentlichen Veränderung des Wertes der kinetischen Energie erfolgt; bei einer unwesentlichen Veränderung geht es um die potentielle Energie. Es ist deshalb üblich, dass die Menge der Energie, die für die Aktivierung im genannten Bereich notwendig ist, nur von der Dauer der Einwirkung T und der Zeit der Relaxation vom aktiven, nichtstationären Zustand der Salzlake t abhängt. Da der Mechanismus der Energieübertragung in die Flüssigkeit bei der Kavitationseinwirkung einen "überthermischen" Charakter hat, wächst der Dissoziationzustand der darin enthaltenden Salze im Vergleich zum thermodynamischen Gleichgewicht. Wenn als Maß des Mineralisierungszustands von Wasser dessen elektrische Leitfähigkeit gilt, so wird sich die Erhöhung des Dissoziationszustands der NaCl-Moleküle unter Einwirkung der Kavitationsenergie als scheinbare Vergrößerung von Natriumchlorid $\Delta C$ NaCl zum tatsächlichen Gehalt NaCl erweisen.

Die Dynamik der Veränderung der Kennziffer wurde im Laufe von Experimenten untersucht.

$$\partial C = \frac{\Delta C_{NaCl}}{C_{NaCl}}.$$

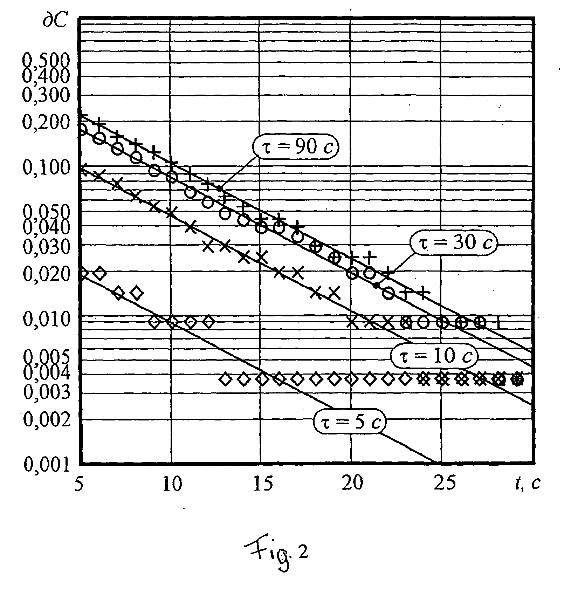

Typische Grafiken der Dämpfung sind in Fig. 2 gezeigt. Mit der doppeltparametrischen Annäherung der ermittelten empirischen Abhängigkeiten wurde folgende Beziehung festgestellt:

$$7=0^{\,1}$$

$$\partial C_{\tau,t} = e^{-0,15t} \sum_{j=0}^{3} \alpha_j (\ln \frac{\tau}{T} - 10)^j, \ \tau > 5 \,,$$

wobei $a_0$ = -0,4821; $a_1$ = 0,3827; $a_2$ = -0,0354; $a_3$ = -0,0006 ist und alle Zeitwerte in Sekunden ausgedrückt sind.

Man kann annehmen, dass mit einer ausreichenden Genauigkeit die Funktion $\partial C$ 100% zeigt, um wieviel Prozent der Gehalt an Salzen in den Wasserlösungen gesenkt werden kann, die der Kavitationsaktivierung mit der Periode der akustischen Welle T unterzogen werden, innerhalb der Zeit $\tau$, damit nach Verlauf der Zeit $t$ dieser Gehalt dem vorgegebenen Gehalt nach der spezifischen Leitfähigkeit entspricht. Die Funktion ist sowohl für die gesättigte Lösung *NaCl* als auch für die gesättigten Lösungen aller Salze Typ $A^+B^-$ mit dem Ionentyp der Verbindung richtig.

Da die organoleptische Kontrolle des Geschmacks des Produkts und die Konservierungseigenschaft der Salze nicht mit ihrem Gesamtgehalt, sondern mit dem Gehalt an Ionen bestimmt wird, mit denen die Salze dissoziieren, kann die Salzmenge bei der Herstellung der Fleischprodukte mit den kavitationsaktivierten Salzlaken verringert werden und gleich (1 - $\partial C$) *100%* angenommen werden. Dabei verringert sich die Haltbarkeit der Produkte nicht, der Geschmack verschlechtert sich nicht, und die ökologische Sicherheit steigt.

Die Zeit $\tau$, die für die wesentliche Vergrößerung des Dissoziationszustands in den Salzlaken notwendig ist, ist nicht länger, und die Zeit t der Rekombination der "überschüssigen" Ionen ist wesentlich kürzer als die jeweiligen Kennwerte des Zerstörungsprozesses (dieser begleitet die Kavitationsbearbeitung) und der nachfolgenden Wiederherstellung der Wasserstoffverbindungen der Wassermoleküle.

Die Dehydrierung des Wassers in der Salzlake unter Einwirkung der Kavitation gewährleistet ihre erhöhte Hydrierungsaktivität im Rohstoff, die erlaubt, aus dem Fleischprodukt traditionell verwendete, unorganisch wasseraufnehmende Komponenten, wie Salze der Phosphor- und Orthophosphorsäure, auszuschließen, ohne das Saftbindungsvermögen zu verringern.

Die Erfindung ist auf die Schaffung eines Verfahrens zum Pökeln von Fleisch gerichtet, einschließlich Schrot- und Hackfleisch für die Herstellung der Wurstwaren, die den gegenwärtigen Anforderungen des Produkts an eine gesunde Ernährung gerecht werden, nämlich ein niedrigerer Gehalt an den für die Gesundheit des Menschen potentiell gefährlichen, unorganischen Konservierungs-, Farbstabilisierungs-, Geschmacks- und Saftbindungszusatzstoffen.

In Fig. 1 ist mit Punkten die diskrete Abhängigkeit der Länge der Kollapsphase der Kavitationsblase Tc in einer gesättigten Lösung von Natriumchlorid von der relativen Druckamplitude der akustischen Welle $a_p$ gezeigt, die die Kavitation erzeugt. Die Menge wurde beim Rechenexperiment mit der Methode der numerischen Integration des Systems der Differentialgleichungen vom Pulsieren der Kavitationsblase vom Hikling-Plesset-Typ im äußeren, akustischen Feld der harmonischen Welle für jeden Wert $a_p$ mit der folgenden, angenäherten Berechnung erhalten:

$$T_c = -\frac{T}{4}\left(\frac{\mathrm{d}r}{\mathrm{d}t}\right)^{-1} \quad \text{Im Punkt r=1,} \qquad (2)$$

wobei $r$ der dimensionslose Radius der Blase und $t$ die dimensionslose Zeit ist.

Die Streuung der ermittelten Werte ist durch den Messfehler der numerischen Integration über das Runge-Kutt-Verfahren mit dem variablen Schritt nach der iterativen Prozedur der Stufenannäherung der Lösung bedingt.

Die Punktkurve ist das Näherungspolynom der 5. Größenordnung, das die Punktmenge Tc = f($a_p$) ausgleicht und mit der Methode der kleinsten Quadrate aufgebaut ist. Die Volllinie ist die empirische Funktion:

$$T_c = 0,04\frac{\mathrm{d}T_e}{\mathrm{d}a_p},$$

wobei $T_e$ die Dauer der Erweiterungsphase ist, wenn der Radius der Blase größer als der Radius der Ruhe oder $r$>1 ist.

Mit den feinen Punktlinien ist die graphische Kalkulation der Begründung des ausgewählten Bereichs von relativen Druckamplituden im Bauch der akustischen Welle gezeigt, die die Kavitation im Reaktor erzeugt.

In Fig. 2 sind die Punktmengen, die über das Experiment- und Kalkulationsverfahren für die gesättigte Lösung von Natriumchlorid ermittelt wurden, die bei T = 22000$^{-1c}$ und mit verschiedenen Werten von $\tau$ bearbeitet ist, die auf dem Bild gezeigt sind, sowie die Punktmengen angeführt, die mit dem Verfahren der kleinsten Quadrate aus der Grafik der ausgleichenden Funktionen $\partial C$ = f($\tau$, t) erhalten wurden.

Das vorgeschlagene Verfahren lässt sich an folgendem Ausführungsbeispiel näher erläutern.

Als Apparat für die Zubereitung der gesättigten Lösung von Kochsalz kann ein Salzlöser Marke XCP-3-0,6P eingesetzt werden; für die Lösungsbeförderung wird eine Nahrungsschleuderpumpe Modell KM32-22-120 eingesetzt, und für die Aktivierung kommt ein Gerät für die Kavitationsdesintigration von flüssigen Nahrungsmedien Typ "Siriniks 4000" (SITB 443146.002TU) zum Einsatz. Die gemeinsame Verwendung dieser Geräte erlaubt die Zubereitung einer konzentrierten Lösung von Kochsalz, die eine Reinigung von nicht auflösbaren Beimischungen und eine Kavitationsdesintigration gewährleistet.

Die Kavitationsdesintigration der Salzlake führt zum Zerfall von Konglomeraten der Salzmoleküle, die in der frisch zubereiteten Lösung durch die Van-der-Waals-Kraft miteinander verbunden sind, in einzelne Moleküle. Der Einwirkung werden auch Assoziaten des Wassers unterzogen, die durch die Wasserstoffverbindungen der Monomoleküle untereinander gebildet sind. Daraufhin werden sie zerstört, wodurch die auflösende und dissoziierende Fähigkeit des Wassers verstärkt wird. Die Kavitationseinwirkung beschleunigt auch die Dissoziation der Salzmoleküle und macht die chemische Aktivität des Wassers durch Bildung von $H_3O^+$- und $OH^-$-Ionen noch stärker. Dabei erfolgt auch die Ablösung der Elektronen von den Außenbahnen der Salzmoleküle unter Einwirkung der Kavitationsenergie, wodurch die weitere Vereinigung der Salzmoleküle in die Assoziaten verhindert wird.

Die freien Elektronen, die eine Hydrathülle aus den Monomolekülen des Wassers erhalten, verhalten sich wie solvatisierte Ionen und können genügend lang existieren, bis sie ihre Ladung an die geerdeten Teile der Kammern der Kavitationsreaktoren nicht zurückgeben. Solche Effekte können durch alternative Methoden der Aktivierung, beispielsweise durch eine elektrochemische Aktivierung, nicht erreicht werden.

Im Laufe des energetischen Austausches der Komponenten der aktivierten Salzlake mit Rohstoffen bilden sich dort komplexe Ionen mit einer vergrößerten, positiven Ladung, wodurch in ihren Hydrathüllen mehr Wassermonomoleküle verbunden werden können. Die Wassermonomoleküle, die frei von diesen Verbindungen geblieben sind, hydrieren die Eiweiße des Rohstoffs. Die Salze der aktivierten Salzlake sind zur Vereinigung in Assoziate weniger fähig; die Konglomerate lassen sich im Rohstoff besser verteilen. Im Wasser lässt sich unter der Einwirkung der Kavitation Wasserstoffperoxid synthetisieren, wobei es sich in Rohstofffermente unter Freisetzung von Energie zersetzt und zur Verbesserung der Qualität des Rohstoffs durch die Beschleunigung der Reifung und zur Versetzung des pH-Werts in den alkalischen Bereich beiträgt; dies führt zur Senkung der Aktivität von Bakterien. Die unmittelbare Einwirkung auf mikrobielle Körper durch die potentielle Kavitationsenergie führt im Laufe der Aktivierung der Salzlake zur Zerstörung der Körperzellenhüllen.

Somit kann durch die Kavitationsbearbeitung der Salzlaken die Pökelzeit verringert, die Qualität des Rohstoffs und des Endprodukts verbessert, die Lebensfunktion der schädlichen Mikroorganismen unterdrückt und die Menge der im Produkt enthaltenen Feuchtigkeit vergrößert werden; dadurch kann auch die Menge an Kochsalz, Nitriten und Phosphaten verringert werden, oder es können Nitrite und Phosphate vollständig aus dem Produkt ausgeschlossen werden.

Die Quelle der akustischen Schwingungen im Reaktor des Apparats Typ "Siriniks 4000" ist ein elektroakustischer, magnetostriktiver Umsetzer Typ PMS 15-22 mit einer Arbeitsfrequenz von 22000Hz und mit einer Amplitude des Schwingungsversatzes der Arbeitskante $A\xi$, die gleich 11 $\mu$m ist. In den zylindrischen Reaktor werden die Schwingungsflachwellen mittels eines akustischen Hohlleitertransformators mit einem Transformationskoeffizient von 0,33 übertragen, d.h., dass die Amplitude des Schwingungsversatzes seiner Kante 11 0,33 = 3,6$\mu$m ist.

Unter der Berücksichtigung, dass der elektroakustische Wirkungsgrad des magnetostriktiven Umsetzers 50% beträgt (s. Bergman L., "Ultraschall und seine Anwendung in der Wissenschaft und Technik",M: IIL, 1956, 726 Seiten mit Bildern), wird hier die bekannte Wechselbeziehung $A_p = \omega c \rho A\xi$ verwendet, um die Druckamplitude $A_p$ im Bauch der akustischen Welle im Reaktor bei einer Winkelfrequenz der Schwingungen $\omega = 2\pi f$, einer Flüssigkeitsdichte p und einer Schallgeschwindigkeit c ausrechnen zu können. Sie ist gleich $2\pi 22000 \cdot 1074$ $1189 \cdot 3,6$ $10^{-6} = 10-10^5$ $\Pi$a oder $10P_h$; dies genügt dem wesentlichen Merkmal der Erfindung.

Die Durchgangsproduktivität Q des Apparats zur Kavitationsdesintegration nach der Aktivierung beträgt bis zu 250l/h, wobei das Volumen $V_r$ des zylindrischen Körperkavitationsreaktors der Flachwelle im Apparat gleich $9,5 \cdot 10^{-4} m^3$ ist. Die Länge $L$ der Magistrale zum Vorschub der Salzlake mit dem Durchmesser $D = 9 \cdot 10^3 m$ vom Reaktor bis zum Behälter mit Rohstoff beträgt 2,4m.

Damit lässt sich Folgendes ausrechnen:

$$\tau = \frac{V_r}{Q} = 13,6\,c; \quad t = \frac{\pi}{4}\frac{D^2 L}{Q} = 2,2\,c$$

Wenn nun der ermittelte Wert und der Wert T, der für den Apparat Siriniks" $22000^{-1}$ beträgt, in den Ausdruck (1) eingesetzt wird, wird der Höchstwert der möglichen Minderung des Gehalts an Salz im Produkt erreicht, der gleich 19% ist.

Als Gerät zur Kavitationsdesintigration kann ein Apparat Typ "Ultramiks 4000" (SITB.443124.004 TU) verwendet werden, der einen gehäuselosen Kavitationsreaktor enthält. In diesem Fall wird die Salzlake zur Aktivierung portionsweise mit einem Volumen von $0,09 m^3$ in den Mischbehälter des Apparats gefüllt.

Unten sind Beispiele des konkreten Einsatzes der Erfindung bei verschiedenen Verfahren zur Vermischung des Fleischrohstoffs mit der Salzlake aufgeführt.

Beispiel 1

Dieses Beispiel behandelt das Pökeln des Fleisches mit einer aktivierten, gesättigten Kochsalzlösung nach GOST-P 51574-2000 im Laufe der Zerkleinerung im Vergleich mit dem traditionellen Pökeln mit trockenem Salz. Das Erzeugnis sind nach GOST 23670-79 Kochwürste "Doktorskaja" bester Qualität.

Die Zerkleinerung des Fleischstücks und dessen Vermischung mit der Salzlake wurden in einem Emulgator FD 2/70, Hersteller Fa. Karl Schell, mit nachfolgender Verarbeitung mit den übrigen Komponenten der Rezeptur einschließlich einer Natriumnitrit-Lösung durchgeführt; die sich ergebende Mischung wurde in einem Cutter K 324, Hersteller Seydelmann, evakuiert. Eine Wärmebehandlung wurde in einer Thermokammer, Hersteller Fessmarm, durchgeführt. Die Wassermenge, die in den Rohstoff mit der Salzlake gelangt, wurde als Wechselbeziehung des Gehalts an Salz in der Rezeptur zum Gewicht von Salz, das 1 kg Wasser bei einer Temperatur von +4°C sättigt, wobei das Gewicht gleich 0,263 kg ist, zu 2,09:0,263 ≈ 8 kg ausgerechnet. Die Wassermenge, die bei der Zubereitung des Hackfleisches zugefügt worden war, wurde im Falle des Nasspökelns um 5kg vermindert.

In der Tabelle 1 sind die statistischen Durchschnittsdaten zu 10 Produktchargen mit einer Rohstoffmasse von je 100 kg aufgeführt.

Tabelle 1

| KENNZIFFERN | VERFAHREN ZUM PÖKELN | |
|---|---|---|
| | mit trockenem Salz | mit der aktivierten Salzlake |
| Rohstoff, (Zusammensetzung, Merkmale) | | |
| entflechstes Rindfleisch, beste Qualität, kg | 25 | 25 |
| entflechstes Schweinefleisch, halbfett, kg | 70 | 70 |
| Eipulver, kg | 0,822 | 0,822 |
| Milch trocken, kg | 2 | 2 |
| Zucker, kg | 0,2 | 0,2 |
| Salz, kg | 2,09 | 1,78 |
| Gewürze und Geschmackzusatzstoffe, kg | 0,1 | 0,1 |
| Natriumnitrit, kg | 0,0071 | 0,0035 |
| Phosphate, kg | 0,3 | Nein |
| Wasser, kg | 25 | 28 |
| Das fertige Produkt | | |
| Gewichtsteil der Feuchtigkeit, % | 65,7±1,4 | 65,9±1,0 |
| Gewichtsteil $NaCl$, % | 2,1±0,2 | 2,1±0,1 |
| Gewichtsteil $NaNO_2$ % | 0,0055±0,0005 | 0,0025±0,0002 |
| organoleptische Kennziffern | normal | Normal |
| Menge der mesophilen aeroben und fakultativen anaeroben Mikroorganismen im Erzeugnis, KOE/g | zugelassen | Zugelassen |

Beispiel 2

Es wird das Pökeln von vorher zerkleinertem Fleisch mit einer aktivierten, gesättigten Kochsalzlösung (Kochsalz nach GOST-P 51574-2000) im Vergleich zu dem traditionellen Pökeln mit trockenem Salz behandelt. Das Erzeugnis nach GOST 23670-79 sind Kochwürste "Molotschnaja" bester Qualität.

Die Zerkleinerung des Fleisches bis zur Schrotgröße mit Teilchen von 15-20mm wurde mit einem Kreisel PM-3000 durchgeführt. Das Schrot wurde in einen Schaufelrührer gefüllt, in dem es mit aktivierter Salzlake oder mit trockenem Salz laufend vermischt wurde. Die Vermischung erfolgte im Laufe von 2-3 Minuten. Vor der Zubereitung des Hackfleisches wurde das Fleisch 12 Stunden lang trockengepökelt und 4 Stunden lang nassgepökelt. Die weitere Zerkleinerung und die Zubereitung des Hackfleisches wurde im einem Cutter K 324, Hersteller Seydelmann, durchgeführt; eine Wärmebehandlung wurde in einer Thermokammer, Hersteller Fa. Fessmarm, durchgeführt.

In der Tabelle 2 sind die statistischen Durchschnittsdaten zu 10 Produkt-Chargen mit Rohstoffgesamtmasse je 100 kg aufgeführt.

Tabelle 2

| Kennziffern | Verfahren zum Pökeln | |
|---|---|---|
| | mit trockenem Salz | mit der aktivierten Salzlake |
| Rohstoff, (Zusammensetzung, Merkmale) | | |
| entflechstes Rindfleisch, erste Sorte, kg | 35 | 35 |
| entflechstes Schweinefleisch, halbfett, kg | 60 | 60 |
| Eipulver, kg | 0,548 | 0,548 |
| Milch trocken, kg | 3 | 3 |
| Zucker, kg | 0,12 | 0,12 |
| Salz, kg | 2,09 | 1,78 |
| Gewürze, Kg | 0,31 | 0,31 |
| Natriumnitrit, kg | 0,0071 | 0,0035 |
| Phospate, kg | 0,3 | Nein |
| Wasser, kg | 30 | 33 |
| Das fertige Produkt | | |
| Gewichtsteil der Feuchtigkeit, % | 67,2±1,7 | 67,4±1,2 |
| Gewichtsteil NaCl, % | 2,1±0,2 | 2,1±0,1 |
| Gewichtsteil NaO2> % | 0,0053±0,0006 | 0,0023±0,0003 |
| organoleptische Kennziffer | normal | normal |
| Menge der mesophilen, aeroben und fakultativen, anaeroben Mikroorganismen im Erzeugnis, KOE/g | zugelassen | zugelassen |

Beispiel 3

Das Pökeln von Vollmuskelfleisch durch das Spritzen mit aktivierter Salzlake im Vergleich zu der gewöhnlichen Salzlake wird behandelt. Das Erzeugnis ist eine Karbonade "Jubeleyny" aus halbfettem Schweinefleisch.
Das Spritzen wurde mit einem Injektor PRESTOMAT P1 24/48 und das Massieren mit einem Fleischzermürber VACOMAT 750, Hersteller Eller, durchgeführt.
In der Tabelle 3 sind statistische Durchschnittsdaten zu 30 Erzeugnissen aufgeführt.

Tabelle 3

| Kennziffern | Das Verfahren zum Pökeln | |
|---|---|---|
| | mit der gewöhnlichen Salzlake | mit der aktivierten Salzlake |
| Zusammensetzung der Salzlake (auf 100 kg Salzlake) | | |
| Wasser, kg | 86,6 | 87,5 |
| TARI Satz P27, kg | 5,0 | 5,0 |
| Salz, kg | 3,4 | 7,5 |
| Das fertige Produkt | | |
| Gewichtsteil *NaCl, %* | 2,5±0,3 | 2,6±0,2 |
| organoleptische Kennziffer | normal | normal |

Somit zeugen die obigen Daten von der Möglichkeit der Umsetzung der angemeldeten Erfindung mit Hilfe der in der Anmeldung beschriebenen oder vorher bekannten Mittel und Verfahren sowie von der Möglichkeit des Erreichens des oben erwähnten technischen Ergebnisses bei der Verkörperung der Gesamtheit der Merkmale der Erfindung.

**Patentansprüche**

1. Verfahren zum Pökeln von Fleisch,
   **dadurch gekennzeichnet,**
   **dass** die Zubereitung einer Kochsalz enthaltenden Salzlake folgende Schritte aufweist:

   - die Salzlake wird durch eine Fließbearbeitung in einem Gehäuse-Kavitationsreaktor oder durch eine Portionsbearbeitung in einem gehäuselosen Kavitationsreaktor aktiviert,
   - die aktivierte Salzlake wird mit Fleischrohstoff vermischt, wobei die Aktivierung der Salzlake bei einem Verhältnis der innerhalb des Reaktors maximalen Druckamplitude der akustischen Welle zum hydrostatischen Druck im Reaktor im Bereich von 2:1 bis 23:1 erfolgt.

2. Verfahren nach Anspruch 1,
   **dadurch gekennzeichnet,**
   **dass** zur Herstellung der Wurstwaren die Vermischung der aktivierten Salzlake mit Fleischrohstoff im Laufe der Zerkleinerung des Fleischrohstoffs erfolgt.

3. Verfahren nach Anspruch 1,
   **dadurch gekennzeichnet,**
   **dass** zur Herstellung der Wurstwaren die Vermischung der aktivierten Salzlake mit Fleischrohstoff gleichzeitig mit der Einführung der aktivierten Salzlake in das vorher zerkleinerte Fleisch durchgeführt wird.

4. Verfahren nach Anspruch 1,
   **dadurch gekennzeichnet,**
   **dass** die Vermischung der aktivierten Salzlake mit Fleischrohstoff durch Spritzen von Vollmuskelfleisch mit der aktivierten Salzlake durchgeführt wird.

5. Verfahren nach Anspruch 1,
   **dadurch gekennzeichnet,**
   **dass** die Vermischung der aktivierten Salzlake mit Fleischrohstoff durch Eintauchen des Vollmuskelfleisches in die aktivierte Salzlake durchgeführt wird.

6. Verfahren nach einem der Ansprüche 1 bis 5,
   **dadurch gekennzeichnet,**
   **dass** zum Pökeln des Fleischrohstoffs die verwertete Salzlake nach ihrer nochmaligen Aktivierung im Kavitationsreaktor verwendet wird.

7. Fleischprodukt, das nach einem der Ansprüche 1 bis 6 hergestellt wird.

**Claims**

1. Method of salting meat, **characterised in that** the preparation of a brine containing cooking salt includes the following steps:

   - the brine is activated by a flow treatment in a cavitation reactor having a housing or by a batch treatment in a cavitation reactor without a housing, and
   - the activated brine is mixed with raw meat, the activation of the brine being effected at a ratio between the maximum pressure amplitude of the acoustic wave within the reactor and the hydrostatic pressure in the reactor in the range of between 2:1 and 23:1.

2. Method according to claim 1, **characterised in that**, to produce the sausages, the mixing of the activated brine with raw meat is effected during the course of the mincing of the raw meat.

3. Method according to claim 1, **characterised in that**, to produce the sausages, the mixing of the activated brine with raw meat is carried out simultaneously with the introduction of the activated brine into the previously minced meat.

4. Method according to claim 1, **characterised in that** the mixing of the activated brine with raw meat is carried out by spraying whole-muscle meat with the activated brine.

5. Method according to claim 1, **characterised in that** the mixing of the activated brine with raw meat is carried out by immersing the whole-muscle meat in the activated brine.

6. Method according to one of claims 1 to 5, **characterised in that**, after being repeatedly activated in the cavitation reactor, the utilised brine is used to salt the raw meat.

7. Meat product which is produced according to one of claims 1 to 6.


**Revendications**

1. Procédé de salaison de la viande,
   **caractérisé,**
   **en ce que** la préparation d'une saumure contenant du sel de cuisine a les stades suivants:

   - on active la saumure par un traitement en continu dans un réacteur à cavitation à enveloppe ou par un traitement discontinu dans un réacteur à cavitation sans enveloppe,
   - on mélange la saumure activée à de la matière première carnée, l'activation de la saumure s'effectuant par un rapport de l'amplitude de pression maximum de l'onde acoustique à l'intérieur du réacteur à la pression hydrostatique dans le réacteur comprise entre 2:1 et 23:1.

2. Procédé suivant la revendication 1,
   **caractérisé**
   **en ce que**, pour la production de saucisse, on effectue le mélange de la saumure activée à la matière première carnée au cours de la fragmentation de la matière première carnée.

3. Procédé suivant la revendication 1,
   **caractérisé**
   **en ce que**, pour la production de saucisse on effectue le mélange de la saumure activée à la matière première carnée en même temps que l'on introduit la saumure activée dans la viande préalablement fragmentée.

4. Procédé suivant la revendication 1,
   **caractérisé**
   **en ce que** l'on effectue le mélange de la saumure activée à de la matière première carnée en projetant de la saumure activée sur de la viande dont on n'a pas retiré les muscles.

5. Procédé suivant la revendication 1,
   **caractérisé**
   **en ce que** l'on effectue le mélange de la saumure activée à la matière première carnée en immergeant de la viande dont on n'a pas retiré les muscles dans la saumure activée.

6. Procédé suivant l'une des revendications 1 à 5,
   **caractérisé en ce que**,
   pour saler la matière première carnée, on utilise la saumure valorisée après l'avoir activée une fois de plus dans le réacteur de cavitation.

7. Produit carné, produit selon l'une des revendications 1 à 6.

Fig. 1

Fig. 2

## IN DER BESCHREIBUNG AUFGEFÜHRTE DOKUMENTE

### In der Beschreibung aufgeführte Patentdokumente

- RU 2102890 C1
- RU 221914 C2
- RU 2130267 C1
- SU 1717063 A1
- RU 2171568 C1

### In der Beschreibung aufgeführte Nicht-Patentliteratur

- **S. BELOV V.J. ; VAGIN V.V.** Salz - der universelle Nahrungsmittelzusatzstoff. *Fleischindustrie,* 1998, (6
- **BORISENKO A.A.** Die thermogravimetrische Analyse der Verbindungsformen von Feuchtigkeit im salzigen Rindfleisch. *Fleischindustrie,* 2001, (7), 45, 46
- **ELPINER I.E.** Ultraschall, Physikalischchemische und biologische Einwirkung. *M: IF-ML,* 1963, 420
- **BUCH VON SCHESTAKOV S.D.** Grundlagen der Technologie für die Kavitationsdesintegration; die Theorie des Kavitationsreaktors. *M: EDA-press,* 2001, 173
- **S. KNAPP R. ; DAILY J.** *Hammet, Kavitatsion: Mir,* 1974, 348
- s. Physik und Technik des Hochleistungsultraschalls. **RED. VON L.D. ROZENBERG.** Die Hochleistungsultraschallfelder. M: Nauka-Verlag, 1968, 265
- **S. BERGMAN L.** Ultraschall und seine Anwendung in der Wissenschaft und Technik. *M: IIL,* 1956, 726